# FASCICULE DE BREVET EUROPEEN

(11) **EP 0 649 897 B1**
(45) Date de publication et mention de la délivrance du brevet: **25.08.1999**
(21) Numéro de dépôt: 94402323.3
(22) Date de dépôt: 18.10.1994
(51) Int. Cl.: C10L 5/40, C10L 11/04

(54) **Matériau solide combustible. Allume-feux. Procédé de fabrication.**
Brennbarer Feststoff, Feueranzünder und Herstellungsverfahren
Combustible solid material, firelighters, and method of manufacturing

(30) Priorité: 26.10.1993 FR 9312757
(43) Date de publication de la demande: 26.04.1995
(73) Titulaire: CHIMINOVE S.A., F-16000 Angoulême (FR)
(72) Inventeur: Vinuesa, Germain, F-16000 Angouleme (FR)
(74) Mandataire: Pech, Bernard

(56) Documents cités:
- CH-A- 192 104
- FR-A- 2 514 024
- US-A- 3 431 093
- US-A- 3 894 894

## Description

La présente invention se situe dans le domaine général des matériaux solides combustibles, plus particulièrement dans le sous-domaine des allume-feux et des systèmes d'allumage domestiques (allume-cheminées, barbecues), mais néanmoins aussi dans celui des combustibles solides d'usage (combustible principal), notamment pour cheminées, poêles à bois et chaudières.

Elle concerne de nouveaux matériaux solides combustibles, notamment de nouveaux allume-feux, et un procédé de fabrication de ces nouveaux matériaux.

Le brevet français FR 2 514 024 décrit des matériaux solides combustibles d'usage ou d'allumage, imperméables à l'eau, en forme de briquettes.

Une première briquette comporte une couche de nitrocellulose et/ou d'acétate de cellulose à la surface d'un produit moulé de poudres d'un matériau solide combustible et d'un agent oxydant, ledit produit étant lié par de la nitrocellulose et/ou de l'acétate de cellulose.

Une seconde briquette comporte une couche de nitrocellulose et/ou d'acétate de cellulose à la surface d'un produit moulé de poudres d'un matériau solide combustible, avec ou sans agent oxydant, ledit produit étant lié par une cire.

La nitrocellulose est toujours utilisée sous forme d'une solution dans un solvant organique, notamment l'acétone, solvant qui est ensuite évaporé au cours de la fabrication de la briquette, d'où nuisances et nécessité de protections particulières, car ces solvants sont inflammables et toxiques.

Leur rejet à l'atmosphère au cours de la phase de séchage nécessite la mise en place de systèmes de récupération.

De plus, ces briquettes sont toujours de type bi-composition, puisqu'elles comportent un revêtement à la surface d'un produit moulé, ce qui implique une mise en oeuvre plus complexe et coûteuse.

Il faut par ailleurs noter que lorsque la nitrocellulose est utilisée comme liant du produit moulé (première briquette), ce produit moulé contient toujours un agent oxydant minéral en mélange avec le matériau solide combustible, ce qui est pénalisant au niveau mise en oeuvre, coût et performances calorifiques.

Le brevet français FR 2 270 315 décrit un matériau solide combustible d'allumage ou d'usage constitué de débris végétaux agglomérés par un complexe à base d'amidon.

Le brevet français FR 2 640 280 décrit des matériaux solides combustibles d'usage constitués de produits organiques de récupération broyés, agglomérés par une colle d'origine maritime comme la farine de poisson.

Ces matériaux sont toutefois très sensibles à l'eau et à l'humidité atmosphérique, et nécessitent un important apport d'oxygène pour brûler de manière satisfaisante, ce qui n'est pas pratique pour l'allumage par exemple du charbon de bois, car le tas de charbon de bois déposé sur l'élément d'allumage peut finir par l'étouffer.

L'homme du métier est donc à la recherche d'un matériau solide combustible, et notamment d'un allume-feux, peu sensible à l'humidité, pouvant brûler de manière satisfaisante avec un faible apport d'oxygène, ne présentant pas les inconvénients précités des matériaux de l'état de la technique.

Il a été découvert que, de façon inattendue, on pouvait obtenir un tel matériau selon un procédé non polluant, mis en oeuvre en milieu aqueux et en l'absence de tout solvant organique, ne nécessitant donc aucun système de récupération de solvants, en malaxant tout d'abord un mélange de nitrocellulose et d'un plastifiant de la nitrocellulose, puis ensuite en additionnant dans le mélange une colle soluble dans l'eau et un produit organique combustible contenant des fibres végétales de cellulose.

Après mise en forme et évaporation de l'eau, on obtient un matériau solide combustible, et notamment un allume-feux, peu sensible à l'humidité, pouvant donc être allumé dans des conditions climatiques difficiles, monocomposition, ne nécessitant donc pas de revêtement particulier pour le protéger de l'humidité, ayant un flux de chaleur de combustion suffisant et une durée de combustion assez longue pour servir de relais d'allumage de matières telles que le bois, le charbon ou le charbon de bois, formant une braise après combustion, ce qui lui permet d'être également utilisé comme matériau combustible d'usage, ne générant pas ou très peu de fumée (absence de condensats carbonés imbrûlés), sans odeur et n'en produisant pratiquement pas au cours de sa combustion, sans exsudat, agissant donc pour une meilleure préservation de l'environnement et un plus grand confort de l'utilisateur, rapide à allumer, pouvant être directement fabriqué en forme de blocs cylindriques, cubiques, parallélépipédiques ou en toute autre forme adaptée, pouvant être inséré dans le combustible principal après avoir été allumé, ne nécessitant que très peu d'oxygène pour sa combustion, ce qui ne contraint pas l'utilisateur dans l'agencement des éléments du combustible principal afin d'aérer la masse, ne nécessitant pas d'agent oxydant minéral pour posséder cette propriété, supportant bien les à-coups d'alimentation en oxygène, ne présentant aucun risque spécifique du fait de la présence de nitrocellulose.

Les nouveaux matériaux solides combustibles selon l'invention, qui contiennent, comme selon l'état de la technique, de la nitrocellulose et un produit organique combustible contenant des fibres végétales de cellulose, sont des matériaux monocomposition comprenant :
. 10% à 35% en poids, de préférence entre 15% et 30% en poids, et mieux encore entre 20% et 25% en poids, de nitrocellulose,
. 30% à 70% en poids, de préférence entre 40% et 60% en poids, et mieux encore entre 45% et 55% en poids, d'un produit organique combustible contenant des fibres végétales de cellulose,
. 10% à 40% en poids, de préférence entre 15% et 35% en poids, et mieux encore entre 20% et 30% en poids, d'un plastifiant de la nitrocellulose,
. 1% à 15% en poids, de préférence entre 1% et 5% en poids, et mieux encore entre 1% et 3% en poids, d'une colle soluble dans l'eau.

Selon une variante préférée, les nouveaux matériaux solides combustibles selon l'invention ne contiennent pas d'autres constituants, notamment d'agent oxydant minéral, c'est à dire que la somme des pourcentages pondéraux de nitrocellulose, de produit organique combustible contenant des fibres végétales de cellulose, de plastifiant de la nitrocellulose et de la colle soluble dans l'eau est égale à 100.

Les matériaux solides combustibles selon l'invention peuvent toutefois comprendre de faibles quantités d'eau résiduelle, en général moins de 2% en poids. Dans le cadre de la présente invention, tous les pourcentages pondéraux précités doivent se comprendre comme exprimés par rapport au matériau solide combustible sec.

De façon préférée, les nouveaux matériaux solides combustibles selon l'invention se présentent en forme de blocs, de préférence cubiques, cylindriques ou parallélépipédiques. Toute autre forme adaptée à une utilisation particulière est également possible.

Selon une variante particulièrement préférée, les matériaux solides combustibles selon l'invention sont des allume-feux, c'est à dire qu'ils peuvent servir de relais d'allumage d'un combustible principal tel que bois, bois reconstitué, bûches artificielles, charbon de bois et autres charbons. Les allume-feux domestiques, tels que les allume-feux pour cheminées, poêles et barbecue, sont particulièrement concernés par l'invention.

Selon d'autres variantes, les nouveaux matériaux solides combustibles selon l'invention peuvent servir de combustible principal, notamment pour cheminées, poêles à bois et chaudières, en se présentant par exemple sous forme de bûches, ou bien encore ils peuvent être utilisés en forme de bougies pour protéger les cultures contre le gel, dans les vergers, vignes et serres par exemple.

Pour mettre en oeuvre la présente invention, tout type de nitrocellulose peut convenir, ainsi que tout mélange de divers types de nitrocellulose. On préfère toutefois utiliser une nitrocellulose, ou un mélange de nitrocelluloses, dont le taux d'azote est compris entre 10% et 13,5% en poids , exprimés par rapport à la nitrocellulose sèche.

On distingue habituellement les nitrocelluloses les plus nitrées, à usage militaire, appelées cotons-poudre (CP), dont le taux d'azote varie entre environ 12,3% et 13,5%, et les cotons azotiques (CA), à usage civil, dont le taux d'azote est compris entre 10% et 12,3% environ.

De façon particulièrement préférée, notamment pour des raisons économiques et écologiques, on préfère utiliser de la nitrocellulose provenant de déchets de fabrications industrielles, retraités si besoin est, comme par exemple la nitrocellulose récupérée dans les rejets aqueux lors de la fabrication de cotons-poudre, des fines de cotons azotiques ou de cotons-poudre, les nitrocelluloses hors spécifications pour les utilisations traditionnelles, civiles ou militaires, ou les nitrocelluloses régénérées provenant de vieilles poudres. Les nitrocelluloses peuvent, par exemple, se présenter sous formes de floches, fibres, granulés ou écailles.

Les produits organiques combustibles contenant des fibres végétales de cellulose sont bien connus de l'homme du métier. Bien qu'il soit possible d'utiliser de la cellulose quasiment pure, extraite par exemple des dits produits organiques combustibles, on préfère, pour des raisons évidentes de coût, utiliser directement ces produits organiques combustibles bruts. Un traitement physique, séchage, broyage et/ou tamisage, par exemple, peut toutefois être nécessaire, de façon notamment à ce que les produits présentent une structure homogène.

Comme exemples de produits organiques combustibles contenant des fibres végétales de cellulose, on peut citer les poils et linters de coton, le bois, par exemple sous forme de branchages, sciure ou copeaux, les papiers et pâtes à papiers, les rafles végétales, notamment celles de maïs, les pailles de céréales, les coques de fruits, de noix de coco par exemple, des pommes ou aiguilles de pins, des feuilles sèches. Bien entendu, on peut utiliser tout mélange d'au moins deux de ces divers produits organiques combustibles, par exemple, de façon préférée, un mélange de linters de coton et de sciure de bois, ou un mélange de farine de bois et de sciure de bois.

Les plastifiants de la nitrocellulose sont également bien connus de l'homme du métier. Ils doivent être bien distingués des solvants volatils, comme l'acétone, la méthyléthylcétone, les acétates d'éthyle, de butyle ou d'isopropyle, l'éther éthylique, qui sont des gélatinisants de la nitrocellulose mais qui sont ensuite chassés, comme c'est le cas par exemple dans le brevet FR 2 514 024 précité dans l'état de la technique.

Dans le cadre de la présente invention, on entend par "plastifiant" un plastifiant "fixe", dont le point d'ébullition est en général supérieur à 200° C, mieux encore à 250° C, à la pression atmosphérique.

Ces plastifiants fixes sont en général des esters peu volatils, de préférence choisis dans le groupe constitué par la triacétine (triacétate du glycérol) dont le point d'ébullition (P.E.) est 259° C, les phtalates d'alkyle, comme par exemple le phtalate de diméthyle, le phtalate de diéthyle (P.E. 296° C), le phtalate de dibutyle (P.E. 340° C) et les phtalates de dioctyle (notamment de n-octyle ou de 2-éthylhexyle), les phosphates organiques, comme par exemple le triphénylphosphate et le tricrésylphosphate, ainsi que tout mélange d'au moins deux de ces composés.

On peut également utiliser d'autres esters peu volatils, comme par exemple le maléate de diéthyle, le succinate de diéthyle, le succinate de di-n propyle, le succinate de di-isopropyle, le succinate de dibutyle, le succinate de diamyle, l'adipate de diméthyle, l'adipate de diéthyle, l'adipate de di-n propyle, l'adipate de di-isopropyle, l'adipate de dibutyle, le sébaçate de diméthyle, le sébaçate de diéthyle, le diacétate du butane diol-1,3, le diacétate du butane diol-1,4, le laurate de butyle.

De façon particulièrement préférée, on utilise la triacétine, éventuellement en mélange avec un phtalate d'alkyle comme le phtalate de dibutyle ou le phtalate de diéthyle.

On peut également utiliser, comme plastifiants fixes, des urées substituées comme par exemple la centralite, des uréthannes substitués comme l'éthylphényluréthanne éthylique et le diphényluréthanne éthylique, ou le carbonate du glycol (P.E. 248° C).

Les colles solubles dans l'eau sont également bien connues de l'homme du métier. On peut citer par exemple les colles animales, comme par exemple les colles à base de farine de poissons, les colles amylacées et les colles éthercellulosiques, par exemple celles en forme de poudres habituellement utilisées pour le collage des papiers peints, les mélasses de glucose, ainsi que tout mélange d'au moins deux colles précitées.

De façon préférée, on utilise une colle éthercellulosique et, de façon particulièrement préférée, une colle carboxyméthylcellulosique.

Comme exemples d'autres colles éthercellulosiques, on peut citer les colles carboxyméthyl 2-hydroxyéthylcellulosiques, les colles 2-hydroxyéthylcellulosiques, les colles méthylcellulosiques, les colles 2-hydroxypropyl méthyl cellulosiques, les colles 2-hydroxyéthyl méthyl cellulosiques, les colles 2-hydroxybutyl méthyl cellulosiques, les colles 2-hydroxyéthyl éthyl cellulosiques et les colles 2-hydroxypropyl cellulosiques.

En général, les groupes carboxyméthyles précités sont salifiés sous forme de sels de sodium.

La présente invention a également pour objet un procédé de fabrication des nouveaux matériaux solides combustibles et allume-feux précités.

Ce procédé est mis en oeuvre en milieu aqueux, par exemple dans un malaxeur, en l'absence de tout solvant organique. Il est caractérisé par les étapes successives suivantes :
a) Malaxage d'un mélange de nitrocellulose et d'un plastifiant de la nitrocellulose. Ce qu'il convient d'entendre par "plastifiant" a précédemment été défini. Les nitrocelluloses et plastifiants préférés sont ceux précédemment décrits à propos des nouvelles compositions. On utilise, de préférence, notamment pour des raisons de sécurité, une nitrocellulose humide contenant plus de 25% en poids d'eau, par exemple entre 25% et 60% en poids. On peut aussi utiliser une suspension aqueuse de nitrocellulose.
b) Addition, dans le mélange, d'une colle soluble dans l'eau et d'un produit organique combustible contenant des fibres végétales de cellulose, puis agitation du milieu.

La colle soluble peut par exemple se présenter en forme de poudre, ou en solution ou bouillie aqueuse.

Comme exemples de colles et de produits organiques combustibles contenant des fibres végétales utilisables et/ou préférés, on peut citer tous ceux mentionnés précédemment à propos des nouvelles compositions selon l'invention.

De façon préférée, la colle soluble dans l'eau est introduite avant le produit organique combustible contenant des fibres végétales de cellulose.
c) Elimination de l'eau du milieu, en continu ou non, par exemple par chauffage à la pression atmosphérique. On peut également opérer sous pression réduite, avec ou sans chauffage, ou bien encore en présence d'un composé desséchant hygroscopique.

Un chauffage de quelques jours à 50° C environ à la pression atmosphérique permet par exemple d'obtenir un matériau solide combustible contenant moins de 2% d'eau.

En règle générale, on cherche à obtenir un matériau solide combustible ayant une forme bien déterminée, adaptée à l'usage auquel ce matériau est destiné. Plusieurs formes préférées ont été précédemment mentionnées.

Pour réaliser cette forme, plusieurs variantes sont possibles.

Selon une première variante, on verse le milieu réactionnel obtenu après l'étape b) et avant l'étape c) dans un moule à la forme appropriée, on met en oeuvre l'étape c), puis on démoule.

Selon une seconde variante, et notamment lorsque le milieu réactionnel est assez fluide, l'étape c) est mise en oeuvre en 2 temps, à savoir qu'on réalise tout d'abord une élimination partielle de l'eau du milieu réactionnel pour concentrer ce milieu et le rendre suffisamment visqueux et pâteux pour que cette pâte soit mise en forme à l'aide de moyens appropriés connus comme l'extrusion, le laminage et la compression. Après mise en forme, on achève l'étape c) d'élimination de l'eau.

Selon une troisième variante, qui est préférée, la quantité d'eau mise en oeuvre dans le malaxeur lors des étapes a) et b) est telle qu'on obtient, à l'issue de l'étape b), une pâte suffisamment visqueuse pour être directement, sans aucun traitement intermédiaire, mise en forme à l'aide des moyens appropriés précités comme l'extrusion, le malaxage et la compression. A titre illustratif, une pâte contenant entre 20% et 40% en poids d'eau, par exemple 30% d'eau, peut être directement mise en forme.

Dans ces conditions, après l'étape b) et avant l'étape c), on met directement en forme la pâte à l'aide des moyens appropriés précités.

La technique par extrusion, par exemple à l'aide d'une presse ou d'une extrudeuse mono ou bi-vis, permet l'obtention de brins ayant une section droite par exemple carrée, rectangulaire, triangulaire, circulaire, elliptique, polygonale, ou ayant toute autre forme souhaitée.

Les brins obtenus par extrusion et les plaques obtenues par laminage peuvent ensuite être découpés aux dimensions voulues.

De façon générale, la réalisation des compositions et la mise en forme peuvent se faire sur des installations traditionnelles de malaxage-extrusion, découpage et essorage, en continu ou non, ou bien encore de malaxage-laminage, découpage et essorage, en continu ou non, ou bien encore par malaxage-filage à la presse, découpage et essorage.

D'autres techniques de réalisation des compositions avec mise en forme peuvent être utilisées, notamment les techniques papetières.

La réalisation des compositions et la mise en forme sont en général mises en oeuvre à la température ambiante (20° C environ).

On peut également opérer avec un léger chauffage, à 50°C par exemple, ce qui permet, dans certains cas, de favoriser le malaxage et la mise en forme. On utilise par exemple dans ce cas un malaxeur pourvu d'une double enveloppe permettant la circulation d'un fluide régulateur de température.

Par ailleurs, il faut préciser que pour obtenir un matériau solide combustible selon l'invention ayant une composition donnée, l'homme du métier sait et peut calculer de façon très simple, la quantité nécessaire de chacun des constituants, compte-tenu de la teneur en eau de ces constituants, ou de leur concentration lorsqu'ils sont en solution ou suspension aqueuse.

Les exemples non limitatifs suivants illustrent l'invention et les avantages qu'elle procure.

Ces exemples ont été réalisés dans un malaxeur-extrudeur comportant une cuve de malaxage de 60 litres de volume utile avec pales en Z et une vis extractrice pour l'extrusion permettant l'obtention de brins cylindriques de diamètre 12mm.

L'introduction des constituants est manuelle et effectuée malaxeur à l'arrêt.

On utilise une nitrocellulose contenant environ 42% d'eau et ayant un taux d'azote de 12,6%, 13,15% ou 13,5% selon les exemples lorsqu'elle est sèche.

la colle utilisée est obtenue par dispersion de 10 parties en poids d'une colle carboxyméthylcellulosique en poudre dans 90 parties en poids d'eau.

Le plastifiant est la triacétine éventuellement en mélange avec du phtalate de dibutyle, et le produit organique combustible contenant des fibres végétales de cellulose est selon les exemples de la sciure de bois, de la farine de bois, des fines de linters de coton, des rafles broyées de maïs, de la paille broyée de céréales (blé et orge), ou des mélanges de ceux-ci.

### Exemple 1

### Allume-feux constitué de 22% nitrocellulose, 21% de linters de coton, 30% de sciure de bois, 25% de triacétine et 2% de colle carboxyméthylcellulosique.

On introduit dans le malaxeur la nitrocellulose humide (8,8 kg de nitrocellulose sèche ayant un taux d'azote de 12,6%) puis 10 kg de triacétine.

Après malaxage de 15min environ, on introduit 8 kg de la dispersion aqueuse de colle (soit 0,8 kg de colle sèche), puis, après un nouveau malaxage de 15min environ, 8,4 kg de fines de linters de coton.

On malaxe de nouveau 15min environ, puis on introduit, en plusieurs additions, 12 kg de sciure de bois, avec malaxage entre chaque addition puis après la dernière addition.

On extrude ensuite la pâte obtenue pour former des brins cylindriques de diamètre 12mm que l'on découpe alors à la longueur souhaitée, 120mm par exemple (manuellement au cutter ou à l'aide d'une machine).

Les blocs cylindriques ainsi obtenus sont séchés 24h à 40° C puis 72h à 60° C. La teneur pondérale en eau résiduelle est inférieure à 2%.

Le matériau solide combustible ainsi obtenu possède tous les critères requis pour servir d'allume-feux. Sa densité, à 20° C, est de 1,02, et son potentiel calorimétrique de 120 cal/g. Un bloc cylindrique de diamètre 12mm et de longueur 120mm qui est allumé à une extrémité présente une durée de combustion de 5 min. La rapidité d'allumage avec une allumette, quelques secondes, est satisfaisante. La résistance à l'étouffement est très bonne (besoin en oxygène faible) et la couleur des flammes est jaune orangé. Lors de la combustion, on ne constate pas ou très peu de fumée et l'odeur est neutre, voisine de celle de bois en combustion.

Lorsque le matériau a brûlé, il se transforme en une braise qui permet de prolonger la fonction d'allumage bien au delà de la durée de combustion, ou d'utiliser ce matériau comme combustible principal.

Par ailleurs, au stockage, les blocs ne présentent aucune exsudation et leur reprise d'humidité est faible (inférieure à 3% pour un stockage de 15 jours sous humidité relative de 60%), sans influence notable sur les propriétés précitées.

Tous les tests de sécurité effectués sur ces blocs montrent que leur fabrication, leur stockage, leur transport et leur utilisation ne présentent aucun risque inhérent à la présence de nitrocellulose. Ils ne présentent en effet aucune sensibilité particulière à la température, à l'onde de détonation, au choc, ou au frottement, comme l'indiquent les résultats suivants d'épreuves normalisées bien connues de l'homme du métier :
- stabilité à 120° C selon le test au violet de méthyle : 100 min environ
- chauffage externe en douille d'acier selon le test d'AUDIBERT-KOENEN : < 1mm
- indice d'aptitude à la détonation dernière barrière (IAD) selon le Card Gap Test : < 1 carte
- sensibilité (CSF) au frottement selon la méthode JULIUS PETERS : 0% à 353 N
- sensibilité (CSI) au choc selon la méthode JULIUS PETERS : 0% à 50 J.

### Exemples 2 à 14

### Autres allume-feux selon l'invention.

Selon la même méthode que celle précitée pour l'exemple 1, on a réalisé d'autres matériaux solides combustibles selon l'invention, utilisables notamment comme allume-feux. Le tableau 1 présente la composition de ces matériaux et le tableau 2 leurs principales caractéristiques.

Pour tous ces exemples, on peut faire les mêmes observations et remarques que pour l'exemple 1, notamment à propos de l'influence de l'humidité, de la rapidité d'allumage, de la résistance à l'étouffement, de la couleur des flammes, de la formation d'une braise après combustion, de l'absence d'odeur, de fumée, d'exsudation, de sensibilité à la température, à l'onde de détonation, au choc et au frottement.

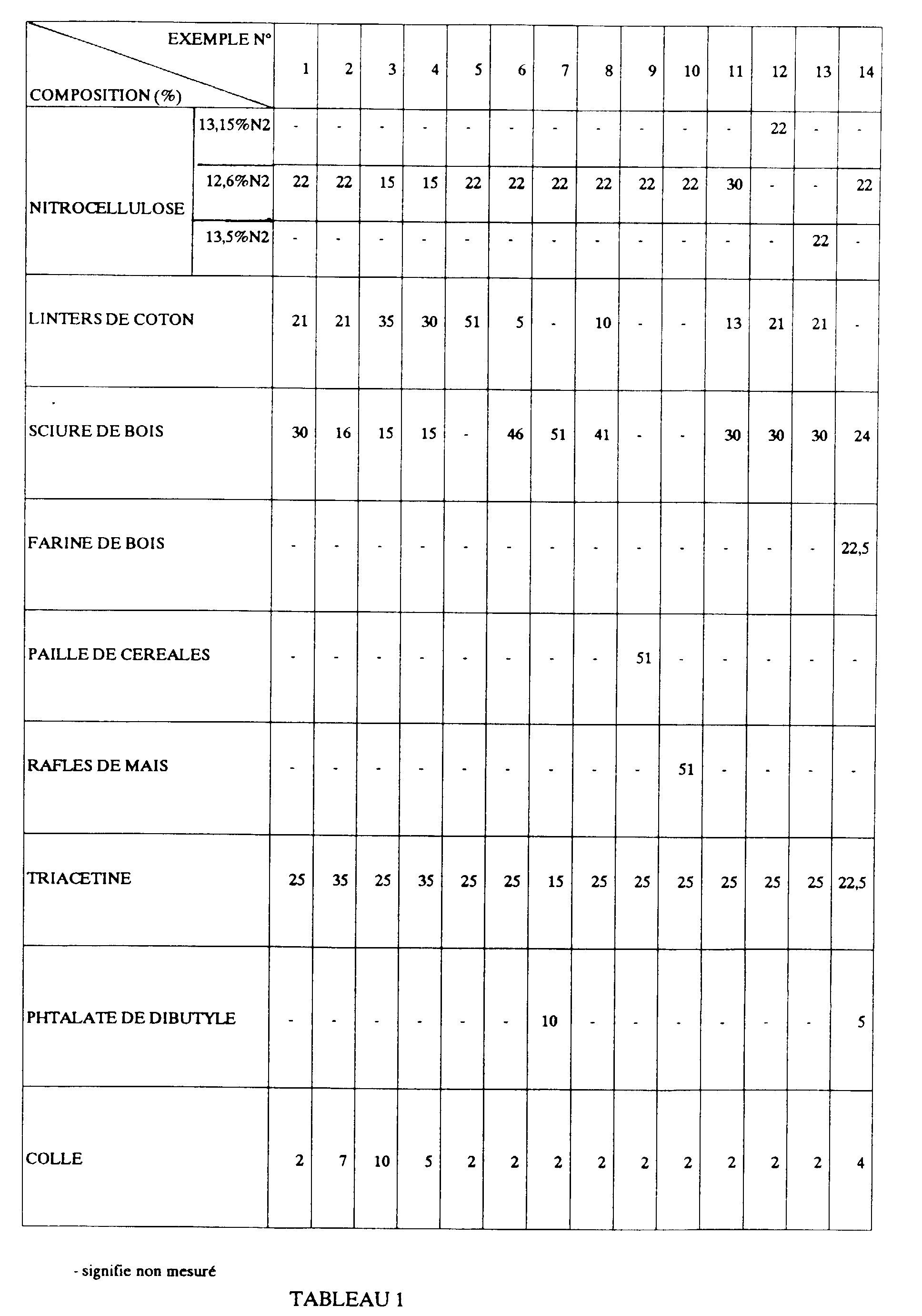

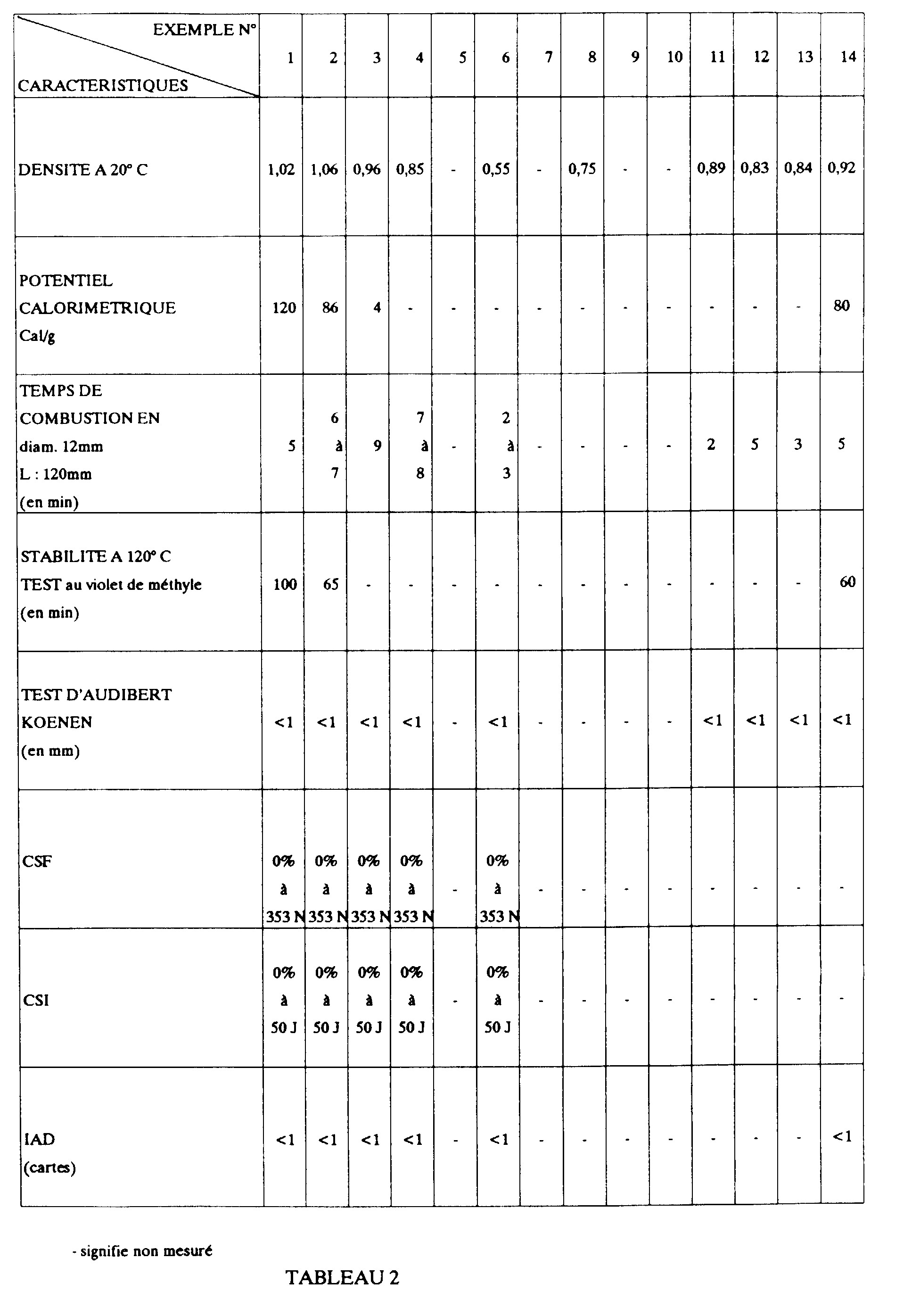

## Revendications

1. Matériau solide combustible contenant de la nitrocellulose et un produit organique combustible contenant des fibres végétales de cellulose, caractérisé en ce qu'il comprend :
. 10% à 35% en poids de nitrocellulose
. 30% à 70% en poids d'un produit organique combustible contenant des fibres végétales de cellulose
. 10% à 40% en poids d'un plastifiant de la nitrocellulose
. 1% à 15% en poids d'une colle soluble dans l'eau.

2. Matériau solide combustible selon la revendication 1, caractérisé en ce que la somme des pourcentages de nitrocellulose, du produit organique combustible contenant des fibres végétales de cellulose, du plastifiant de la nitrocellulose et de la colle soluble dans l'eau est égale à 100.

3. Matériau solide combustible selon la revendication 1, caractérisé en ce qu'il se présente en forme de bloc.

4. Matériau solide combustible selon la revendication 1, caractérisé en ce que ce matériau est un allume-feux.

5. Matériau solide combustible selon la revendication 1, caractérisé en ce que le taux d'azote de la nitrocellulose est compris entre 10% et 13,5% en poids.

6. Matériau solide combustible selon la revendication 1, caractérisé en ce que le produit organique combustible contenant des fibres végétales de cellulose est choisi dans le groupe constitué par les linters de coton, le bois, les papiers et pâtes à papier, les rafles végétales, les pailles de céréales, les coques de fruits, et leurs mélanges.

7. Matériau solide combustible selon la revendication 1, caractérisé en ce que le plastifiant de la nitrocellulose est un ester peu volatil.

8. Matériau solide combustible selon la revendication 1, caractérisé en ce que la colle soluble dans l'eau est choisie dans le groupe constitué par les colles animales, les colles amylacées, les mélasses de glucose, les colles éthercellulosiques, et leurs mélanges.

9. Matériau solide combustible selon la revendication 1, caractérisé en ce que le produit organique contenant des fibres végétales de cellulose est un linters de coton et/ou de la farine de bois et/ou de la sciure de bois, en ce que le plastifiant de la nitrocellulose est la triacétine ou un mélange de triacétine avec un phtalate d'alkyle, et en ce que la colle soluble dans l'eau est une colle carboxyméthylcellulosique.

10. Procédé de fabrication en milieu aqueux d'un matériau solide combustible selon la revendication 1, caractérisé par la mise en oeuvre des étapes successives suivantes :
a) Malaxage d'un mélange de nitrocellulose et d'un plastifiant de la nitrocellulose
b) Addition dans le mélange d'une colle soluble dans l'eau et d'un produit organique combustible contenant des fibres végétales de cellulose, puis agitation du milieu
c) Elimination de l'eau du milieu.

11. Procédé selon la revendication 10, caractérisé en ce que la colle soluble dans l'eau est introduite avant le produit organique combustible contenant des fibres végétales de cellulose.

12. Procédé selon la revendication 10, caractérisé en ce que la quantité d'eau mise en oeuvre lors des étapes a) et b) est telle qu'on obtient, à l'issue de l'étape b), une pâte suffisamment visqueuse pour être directement mise en forme, et en ce que, après l'étape b) et avant l'étape c), la pâte est mise en forme à l'aide de moyens appropriés.

## Patentansprüche

1. Festes brennbares Material, das Nitrocellulose und ein brennbares organisches Produkt enthält, das pflanzliche Cellulosefasern enthält,
dadurch gekennzeichnet, daß es enthält:
· 10 bis 35 Gew.-% Nitrocellulose,
· 30 bis 70 Gew.-% eines brennbaren organischen Produkts, das pflanzliche Cellulosefasern enthält,
· 10 bis 40 Gew.-% eines Weichmachers für Nitrocellulose sowie
· 1 bis 15 Gew.-% eines wasserlöslichen Leims.

2. Festes brennbares Material nach Anspruch 1, dadurch gekennzeichnet, daß die Summe der Prozentanteile an Nitrocellulose, dem brennbaren organischen Produkt, das pflanzliche Cellulosefasern enthält, dem Weichmacher für Nitrocellulose sowie dem wasserlöslichen Leim gleich 100 ist.

3. Festes brennbares Material nach Anspruch 1, dadurch gekennzeichnet, daß es in Blockform vorliegt.

4. Festes brennbares Material nach Anspruch 1, dadurch gekennzeichnet, daß es ein Feueranzünder ist.

5. Festes brennbares Material nach Anspruch 1, dadurch gekennzeichnet, daß der Stickstoffgehalt der Nitrocellulose im Bereich von 10 bis 13,5 Gew.-% liegt.

6. Festes brennbares Material nach Anspruch 1, dadurch gekennzeichnet, daß das brennbare organische Produkt, das pflanzliche Cellulosefasern enthält, ausgewählt ist unter Baumwolllinters, Holz, Papier und Papiermassen, Pflanzenstielen und Maiskolben, Getreidestroh und Fruchtschalen sowie Gemischen dieser Produkte.

7. Festes brennbares Material nach Anspruch 1, dadurch gekennzeichnet, daß der Weichmacher für die Nitrocellulose ein wenig flüchtiger Ester ist.

8. Festes brennbares Material nach Anspruch 1, dadurch gekennzeichnet, daß der wasserlösliche Leim ausgewählt ist unter tierischen Leimen, Stärkeleimen, Glucosemelassen und Celluloseetherleimen sowie Gemischen dieser Produkte.

9. Festes brennbares Material nach Anspruch 1, dadurch gekennzeichnet, daß das organische Produkt, das pflanzliche Cellulosefasern enthält, Baumwolllinters und/oder Linters aus Holzmehl und/oder aus Holzspänen sind, daß der Weichmacher für die Nitrocellulose Triacetin oder ein Gemisch von Triacetin mit einem Alkylphthalat ist sowie, daß der wasserlösliche Leim ein Carboxymethylcellulose-Leim ist.

10. Verfahren zur Herstellung eines festen brennbaren Materials nach Anspruch 1 in wäßrigem Medium,
gekennzeichnet durch Durchführung folgender Schritte nacheinander:
a) Verkneten eines Gemisches von Nitrocellulose und einem Weichmacher für Nitrocellulose,
b) Zusatz eines wasserlöslichen Leims und eines brennbaren organischen Produkts, das pflanzliche Cellulosefasern enthält, zu dem Gemisch und anschließendes Berühren des Mediums,
und
c) Abtrennung des Wassers aus dem Medium.

11. Verfahren nach Anspruch 10, dadurch gekennzeichnet, daß der wasserlösliche Leim vor dem brennbaren organischen Produkt, das pflanzliche Cellulosefasern enthält, eingebracht wird.

12. Verfahren nach Anspruch 10, dadurch gekennzeichnet, daß in den Stufen a) und b) eine solche Wassermenge eingesetzt wird, daß am Ende der Stufe b) eine breiartige Masse mit einer Viskosität erhalten wird, die für eine direkte Formgebung ausreicht, sowie, daß die breiartige Masse nach Stufe b) und vor Stufe c) mit Hilfe einer geeigneten Einrichtung geformt wird.

## Claims

1. A solid, combustible material containing nitrocellulose and a combustible organic product containing cellulosic plant fibres, characterised in that it comprises:
- 10 to 35 wt.% of nitrocellulose
- 30 to 70 wt.% of a combustible organic product containing cellulosic plant fibres
- 10 to 40 wt.% of a nitrocellulose plasticiser
- 1 to 15 wt.% of a water-soluble glue.

2. A solid, combustible material according to claim 1, characterised in that the sum of the percentages of nitrocellulose, the combustible organic product containing cellulosic plant fibres, the nitrocellulose plasticiser and the water-soluble glue is 100.

3. A solid, combustible material according to claim 1, characterised in that it is in block form.

4. A solid, combustible material according to claim 1, characterised in that said material is a fire lighter.

5. A solid, combustible material according to claim 1, characterised in that the nitrogen content of the nitrocellulose is between 10 and 13.5 wt.%.

6. A solid, combustible material according to claim 1, characterised in that the combustible organic product containing cellulosic plant fibres is selected from the group consisting of cotton linters, wood, paper and paper pulp, plant stalks and cobs, cereal straw, fruit husks and mixtures thereof.

7. A solid, combustible material according to claim 1, characterised in that the nitrocellulose plasticiser is an ester of relatively low volatility.

8. A solid, combustible material according to claim 1, characterised in that the water-soluble glue is selected from the group consisting of animal glues, starch-derived glues, glucose molasses, cellulose ether glues and mixtures thereof.

9. A solid, combustible material according to claim 1, characterised in that the organic product containing cellulosic plant fibres consists of cotton linters and/or wood flour and/or sawdust, in that the nitrocellulose plasticiser is triacetin or a mixture of triacetin and an alkyl phthalate, and in that the water-soluble glue is a carboxymethyl cellulosic glue.

10. A process for producing in an aqueous reaction medium a solid, combustible material according to claim 1,
characterised by implementation of the following successive stages:
a) compounding of a mixture of nitrocellulose and a nitrocellulose plasticiser
b) addition to the mixture of a water-soluble glue and a combustible organic product containing cellulosic plant fibres, then stirring of the reaction medium
c) elimination of the water from the reaction medium.

11. A process according to claim 10, characterised in that the water-soluble glue is introduced before the combustible organic product containing cellulosic plant fibres.

12. A process according to claim 10, characterised in that the amount of water used during stages a) and b) is such that there is obtained, at the end of stage b), a paste which is sufficiently viscous to be directly shaped and in that, after stage b) and before stage c), the paste is shaped by suitable means.
